# EUROPÄISCHE PATENTSCHRIFT

(11) **EP 1 506 096 B1**
(45) Veröffentlichungstag und Bekanntmachung des Hinweises auf die Patenterteilung: **17.09.2008**
(21) Anmeldenummer: 03737876.7
(22) Anmeldetag: 09.05.2003
(51) Int. Cl.: B42D 15/00, B42D 15/10

(54) **OPTISCH VARIABLES ELEMENT**
OPTICALLY VARIABLE ELEMENT
ELEMENT OPTIQUEMENT VARIABLE

(30) Priorität: 14.05.2002 DE 10221491
(43) Veröffentlichungstag der Anmeldung: 16.02.2005
(73) Patentinhaber: Leonhard Kurz Stiftung & Co. KG, 90763 Fürth (DE)
(72) Erfinder: SCHILLING, Andreas, CH-6332 Hagendorn (CH); TOMPKIN, Wayne, Robert, CH-5400 Baden (CH); STAUB, René, CH-6332 Hagendorn (CH)
(74) Vertreter: Zinsinger, Norbert
(86) Internationale Anmeldenummer: PCT/DE2003/001483
(87) Internationale Veröffentlichungsnummer: WO 2003/095657

(56) Entgegenhaltungen:
- US-A- 4 568 141
- US-A- 5 032 003
- US-A- 6 157 487
- US-A1- 2001 043 396

## Beschreibung

Für bestimmte Anwendungen wie dem Dokumenten-Sicherheitsbereich gilt das Ziel, zur Echtheitserkennung definierte und leicht erkenn- und erklärbare Sicherheitsmerkmale anzubieten.

Beispielsweise beschreibt die WO 97/19821 ein optisch variables Flächenmuster mit mindestens einer Repräsentation einer graphischen Konfiguration. Jeder Repräsentation sind Oberflächenbereiche einer bestimmten Art zugeordnet. Bei einer Beleuchtung mit sichtbarem Licht werden die Repräsentationen in Gestalt von Bildern sichtbar, die unter verschiedenen Blickwinkeln helle und dunkle Punkte aufweisen. Die genannten Oberflächenbereiche weisen Gitterstrukturen auf, deren Linienzahl größer ist als 250 Linien/mm, so daß sich im sichtbaren Bereich deutlich sichtbare Beugungseffekte ergeben.

Dokument US-A-2001/043396 beschreibt Beugungselemente, die in den Zwischenräumen der Hintergrundelemente angebracht sind. Die Beugungseffekte der Hintergrundelemente sind von den zwischenräumlichen Beugungselementen beeinträchtigt. Eine Überdeckung mit einer Dünnfilmstruktur besteht hier nicht.

Ein Dokument mit einem beugungsoptischen Sicherheitselement ist beispielsweise aus der EP 0 105 099 B1 bekannt. Das Sicherheitselement weist eine Beugungsstruktur auf, die durch Beugung des einfallenden Lichtes mindestens ein Farbmuster erzeugt, das ein visuell nachprüfbares Echtheitsmerkmal darstellt. Die Beugungsstruktur ist derartig ausgebildet, daß sich das bei einer gegebenen Beleuchtungs- und Beobachtungsrichtung einstellende Farbmuster mit lokal vorbestimmter Geschwindigkeit entlang einer vorbestimmten Bahn bewegt, wenn das Substrat in seiner Ebene in einem bestimmten Drehsinn und mit einer bestimmten Geschwindigkeit gedreht wird.

Die EP 0 375 833 B1 offenbart ein optisch variables Flächenmuster mit einer graphischen Darstellung, wobei das Flächenmuster in m-Rasterfelder eingeteilt ist, die optisch aktive Beugungselemente mit mehr als 10 Linien/mm enthalten. Bei diesem bekannten optisch variablen Flächenmuster weist jedes Rasterfeld eine größte Abmessung von weniger als 0,3 mm und eine Einteilung in N-Feldanteile mit je einem Beugungselement auf. Jedes Beugungselement entspricht einem vorbestimmten Pixel einer von N-Darstellungen. Die Parameter einer Reliefstruktur sind in jedem der N-Beugungselemente durch die Zugehörigkeit zu einer Teilfläche vorbestimmt, so daß jede der N-Darstellungen in einer vorbestimmten Betrachtungsrichtung des Flächenmusters sichtbar ist.

Ein optisches Interferenzsicherheitselement beschreibt die US-A 3 858 977. Dieses bekannte Element weist ein Substrat und ein Filter auf, das mindestens eine optische Interferenzschicht aufweist. Die optische Interferenzschicht besitzt eine bekannte Charakteristik ihrer Spektralreflektanz und eine davon verschiedene bekannte Spektraltransmittanz, die beide mit dem Lichteinfallswinkel variieren. Das Substrat, das einen Flächenbereich eines Wertdokumentes, wie einer Banknote, bilden kann, weist einen Oberflächenabschnitt auf, der zum Filter benachbart und gefärbt ist, um einen Teil des durch das Filter transmittierten Lichtes zu absorbieren.

Optisch variable Flächenmuster, die wie die oben beschriebenen optisch variablen Flächenmuster ausgestaltet sind, können je nach Design- und Technologiewahl in Abhängigkeit vom Blickwinkel unterschiedliche visuelle, optisch-variable Effekte wie eine Dreidimensionalität bzw. Perspektivität, Bewegungseffekte, Bild-Flips o.dgl. erzeugen. Beim Drehen oder Kippen des Flächenmusters bzw. des mit einem solchen Flächenmuster versehenen Elementes um bestimmte Raumachsen erscheinen viele Designelemente in den typischen Regenbogenfarben.

Dieser quasi kontinuierliche Übergang über das gesamte Regenbogenspektrum ist nun bei einigen Sicherheitsanwendungen mit Nachteilen behaftet. Er steht dem Ziel, zur Echtheitserkennung möglichst definierte und leicht erkenn- und erklärbare Sicherheitsmerkmale vorzusehen, im Gegensatz. Ein solcher kontinuierlicher Farbübergang bzw. Farbwechsel stellt nämlich ein Definitionsproblem dar. Außerdem ist eine klare Abgrenzung von Merkmalen bezüglich der Funktionalität und des Erscheinungsbildes zwischen Sicherheitsanwendung und kommerziellen Anwendungen notwendig, um Verwechslungen durch einfache Imitation oder durch den Transfer kommerzieller Merkmale auf Sicherheitsdokumente usw. zu unterbinden.

Der Erfindung liegt deshalb die Aufgabe zugrunde, ein optisch variables Element zu schaffen, das für den Betrachter beim Drehen oder Kippen nicht den Eindruck eines kontinuierlichen Farbübergangs sondern eines definierten, fast diskreten Farbwechsels bewirkt.

Diese Aufgabe wird erfindungsgemäß dadurch gelöst, daß Teilflächen eines optisch variablen Flächenmusters achromatische Oberflächenstrukturen mit unterschiedlichen Streu-, Reflexions- oder Beugungscharakteristiken aufweisen und übereinanderliegend mit einer Dünnfilmstruktur kombiniert sind. Die Aufgabe wird weiter durch ein Sicherheitselement gelöst, das ein optisch variables Flächenmuster mit zwei oder mehr Teilflächen aufweist, die achromatische Oberflächenstrukturen mit unterschiedlichen Streu-, Reflexions- oder Beugungscharakteristiken besitzen und übereinanderliegend mit einer Dünnfilmstruktur kombiniert sind.

Achromatische Oberflächenstrukturen sind hierbei Oberflächenstrukturen, die für den Betrachter im Wesentlichen farblos erscheinen. Beispiele für achromatische Oberflächenstrukturen sind Makrostrukturen, achromatische Blaze-Strukturen (asymmetrische Strukturen), symmetrische Strukturen, zum Beispiel Sinusgitter, Mattstrukturen oder Kinoforms. Bei diesen unterschiedlichen Arten von achromatischen Oberflächenstrukturen wird das achromatische Verhalten jeweils durch eine unterschiedliche Gestaltung der Oberflächenstruktur erreicht. Beispiele für achromatische Strukturen sind in der eingangs zitierten WO 97/19821 offenbart.

Bei achromatischen Blaze-Strukturen, wie beispielsweise Sägezahngitter, und achromatischen symmetrischen Strukturen, wie beispielsweise Sinusgitter, ist die Periode der Oberflächenstruktur nicht kürzer als 1,5 µm. Blaze-Strukturen zeichnen sich dadurch aus, daß sie bereichsweise jeweils als lineare Funktionen beschreibbar sind (Sägezahnform, Rechteckform) und somit wie gekippte Spiegel wirken.

Ein bevorzugter Bereich der Größe der Einzelstrukturen der Oberflächenstruktur ist der Bereich von 2 µm bis 10 µm. Die typische Tiefe dieser Oberflächenstrukturen liegt in dem Bereich von 500 nm bis 2 µm. Strukturen aus diesem Größenbereich sind aus herstellungstechnischer Sicht noch größeren Strukturen vorzuziehen.

Damit liegen diese achromatischen Strukturen in einem Bereich, in dem Beugungserscheinungen die optischen Eigenschaften nur noch gering beeinflussen und die Strukturen im Wesentlichen wie gekippte Spiegel wirken. Beispiele für den Aufbau achromatischer Blaze-Strukturen können dem Artikel "Non-standard Diffraction Structures for OVD's" von Renen Staub et al., SPIE Vol. 3314, Seiten 194 bis 202, 1998 entnommen werden.

Makrostrukturen wirken ebenfalls im Wesentlichen durch Reflexion. Eine Makrostruktur läßt sich durch eine stückweise stetige und differenzierbare Funktion M (x,y) der Koordinaten x und y einer gedachten Referenzebene darstellen. Die Funktion M (x, y) beschreibt eine wenigstens in Teilbereichen gekrümmte Fläche, wobei in dem Teilbereich ΔM (x, y) = 0 gilt, und die Funktion M (x, y) keine periodische Dreiecks- oder Rechtecksfunktion ist. Eine Makrostruktur hat eine dreidimensionale Reliefform, die als komplexes Muster gestaltet sein kann und beispielsweise in Form eines Logos oder eines Symbols ausgeformt ist. Benachbarte Extremwerte einer Makrostruktur sind üblicherweise wenigstens 0,1 mm voneinander entfernt.

Mattstrukturen sind durch ein stochastisches Oberflächenprofil charakterisiert, wobei die mittleren Tiefen und die lateralen Größen der Strukturen durch statistische Kenngrößen beschreibbar sind. Hierbei können in verschiedenen Vorzugsrichtungen verschiedene Strukturparameter vorkommen. Wichtige Strukturparameter sind beispielsweise die mittlere Tiefe und die Korrelationslänge. Derartige Mattstrukturen sind durch Prozesse herstellbar, die eine statistische Charakteristik aufweisen. Bei diesen Prozessen handelt es sich z.B. um Naßätzen, Schmirgeln, Sandstrahlen o.dgl..

Typische Zahlenwerte für den Mittenrauwert von Mattstrukturen sind 20 nm bis 2000 nm, vorzugsweise 50nm bis 500 nm. Typische Zahlenwerte für die Korrelationslänge von Mattstrukturen sind 200 nm bis 50.000 nm, vorzugsweise 500 nm bis 10.000 nm.

Kinoforms sind Strukturen, die mittels Beugungseffekten ein benutzerdefiniertes Streuverhalten erzeugen.

Verwendung findet das erfindungsgemäße optisch variable Flächenmuster insbesondere bei Sicherheitselementen wie Dokumenten, Banknoten, Kreditkarten o.dgl.. Die Sicherheitselemente bestehen aus einer Kombination von Dünnfilmstrukturen mit achromatischen diffraktiven Oberflächenstrukturen, wodurch die visuellen Effekte der Dünnfilmstruktur und die visuellen Effekte der diffraktiven Oberflächenstruktur besonders gut aufeinander abgestimmt werden können.

Bevorzugte Weiterbildungen des erfindungsgemäßen optisch variablen Flächenmusters sind in den Unteransprüchen gekennzeichnet.

Eine bevorzugte Ausführungsform des optisch variablen Flächenmusters besteht darin, daß die achromatischen Oberflächenstrukturen als Mattstrukturen ausgebildet sind, die unterschiedliche Streucharakteristiken aufweisen.

Eine besonders interessante Möglichkeit besteht hierbei darin, die Mattstrukturen so zu gestalten, daß sich die Streucharakteristiken der Teilflächen bezüglich Farb- und Kontrastwechsel unterscheiden. Der dadurch erreichte optische Effekt ermöglicht eine besonders gute Abgrenzung der optischen Merkmale.

Weitere vorteilhafte optische Effekte können dadurch erreicht werden, daß die Mattstrukturen sich in ihrer mittleren Tiefe und/oder in ihrer Korrelationslänge unterscheiden. Mittels der Parameter mittlere Tiefe und Korrelationslänge läßt sich die Breite des Streukegels und die Form des Streukegels bestimmen. Durch Teilflächen mit Mattstrukturen, die sich in Bezug auf obige Parameter unterscheiden, wird so erreicht, daß die Teilflächen unterschiedlich geformte Streukegel besitzen.

Mattstrukturen können als isotrope Mattstrukturen ausgebildet sind. Isotrop bedeute hierbei, daß die Streucharakteristik der Mattstruktur nicht abhängig vom Drehwinkel in der Ebene ist. Solche isotropen Mattstrukturen sind hierbei insbesondere dann anzuwenden, wenn Drehwinkeländerungen nicht zu einer Änderung der optischen Wirkung des variablen optischen Elements führen sollen.

Um zusätzliche optische Effekte zu erzielen, können Mattstrukturen als anisotrope Mattstrukturen ausgebildet werden. Hierdurch können dynamische Effekte, beispielsweise eine Änderung der Helligkeit oder des Grauwertes in Abhängigkeit vom Drehwinkel, erreicht werden.

Eine weitere bevorzugte Ausführungsform eines erfindungsgemäßen optisch variablen Flächenmusters besteht darin, daß die achromatischen Oberflächenstrukturen als Makrostrukturen oder Blaze-Strukturen ausgebildet sind, die unterschiedliche Reflexionscharakteristika aufweisen.

Die Größe der Einzelstrukturen der Oberflächenstruktur von Blaze-Strukturen liegt im Bereich von 2 µm bis 10 µm. Die typische Tiefe dieser Oberflächenstrukturen liegt in dem Bereich von 500 nm bis 2 µm. Die Größe von Makrostruktur befindet sich bevorzugt im Bereich von 20 µm bis 30 µm. Die Strukturhöhe einer Makrostruktur ist bevorzugt kleiner als µm, kann jedoch auch 40 µm betragen. Makrostrukturen und Blaze-Strukturen wirken im Wesentlichen durch Reflexion. Durch die Wahl unterschiedlicher Reflexionscharakteristika läßt sich hierbei eine Vielzahl unterschiedlicher optischer Effekte erzielen.

Bei der Dimensionierung der Makrostrukturen sind der Flankenabstand und die Flankensteilheit der Einzelelemente möglichst so zu wählen, daß Beugungseffekte im sichtbaren Bereich nicht auftreten. Weiter ist die Dünnfilmstruktur bevorzugt auf der Makrostruktur anzuordnen, d. h. in Richtung des Betrachters anzuordnen.

Einfache Makrostrukturen sind für Teilflächen durch mathematische Funktionen beschreibbar, beispielsweise durch M(x, y) = a x (1+sin (2π F_{y}×y)) für eine periodische Makrostruktur. F_{y} ist hierbei die Raumfrequenz der periodischen Makrostruktur M (x, y) in Richtung der Koordinatenachse y. Weiter ist es auch möglich, daß die Makrostruktur aus einem vorbestimmten Ausschnitt einer anderen mathematisch Funktion periodisch zusammengesetzt ist. Die Raumfrequenz F_{y} weist einen Wert von höchstens 10 Linien/mm auf und liegt vorzugsweise unter einem Wert von 3 Linien/ mm.

Besonders vorteilhaft ist es hierbei, die Oberflächenstruktur einer Teilfläche als Sägezahnstruktur (Blaze-Struktur) auszubilden. Weitere vorteilhafte geometrische Strukturen sind beispielsweise Mikrolinsenstrukturen und Wellenstrukturen (Makrostrukturen).

Je nach Anwendungsbereich ist es vorteilhaft, eine Dünnfilmstruktur mit einer Dünnfilmschicht mit einen hohen Brechungsindex zu wählen oder eine Dünnfilmstruktur mit einem niedrigen Brechungsindex zu wählen. Ein hoher Brechungsindex wird bevorzugt von einem Brechungsindex größer als 2 gebildet, beispielsweise von einem Brechungsindex von 2.3 oder 2.4. Ein niedriger Brechungsindex wird bevorzugt von einem Brechungsindex kleiner als 1.5 gebildet, beispielsweise von einem Brechungsindex von 1.4.

Dünnfilmstrukturen können hierbei auf unterschiedliche Art und Weise gebildet werden. Zum einen ist es möglich, diese aus einer geradzahligen oder ungeradzahligen Anzahl von Dielektrizitäts-Schichten mit unterschiedlichen Brechungsindizes aufzubauen, beispielsweise aus 5 oder 10 solcher Schichten. Es ist weiter möglich, eine Dünnfilmstruktur aus einer Absorptionsschicht und einer Abstandschicht (λ/4 oder λ/2) aufzubauen, an die eine Reflexionsschicht oder eine optische (transmissive) Trennschicht anschließt.

Weiter ist es vorteilhaft, ein erfindungsgemäßes optisch variables Flächenmuster mit weiteren Sicherheitsmerkmalen zu überlagern. So ist es möglich, das optisch variable Flächenmuster mit einer nur partiell vorhandenen Reflexionsschicht zu kombinieren oder mit einer diffraktiven Struktur, beispielsweise einem Kinegram, zu überlagern. Weiter ist es auch möglich, ein mosaikartiges Flächenmuster herzustellen.

Die Erfindung wird im Folgenden anhand von mehreren Ausführungsbeispielen unter zur Hilfenahme der beiliegenden Zeichnungen beispielhaft erläutert.

Es zeigen:
- Fig. 1: ein optisch variables Flächenmuster bei gerichteter Weißlicht-Beleuchtung zur Verdeutlichung der Wirkung der Kombination einer Dünnfilmstruktur mit zwei isotropen Mattstrukturen,
- Fig. 2: eine der Figur 1 ähnliche Darstellung, wobei das optisch variable Flächenmuster jedoch - im Vergleich mit Figur 1- gekippt worden ist, und
- Fig. 3: eine schematische Darstellung einer asymmetrischen achromatischen Struktur mit einer Dünnfilmstruktur, und einer ebenen Dünnfilmstruktur.

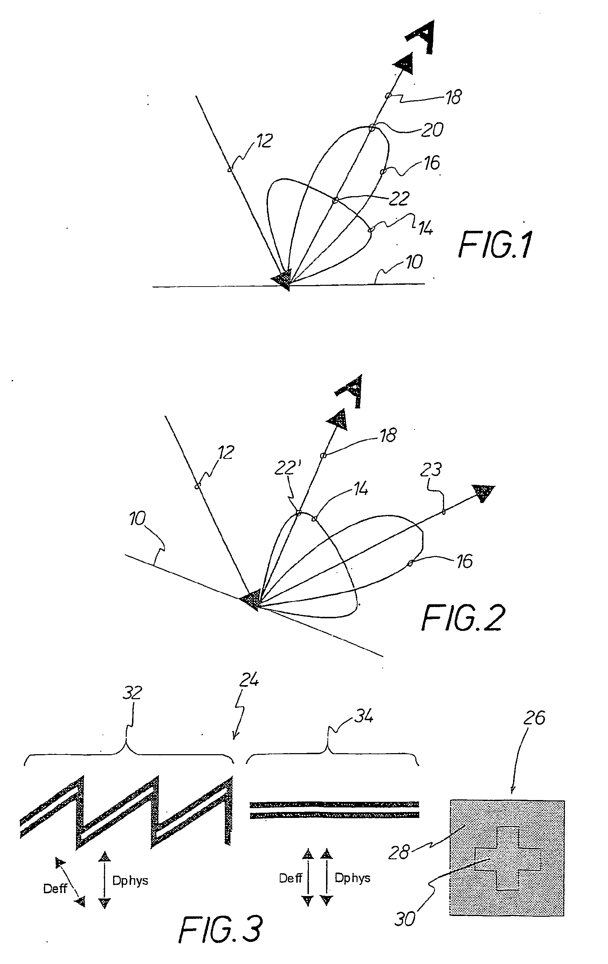

Figur 1 zeigt ein Substrat 10 mit einem Flächenmuster, das eine Kombination einer Dünnfilmstruktur mit zwei isotropen Mattstrukturen aufweist. Der gegen das Substrat 10 gerichtete Pfeil 12 verdeutlicht eine gerichtete Weißlicht-Beleuchtung. Eine solche gerichtete Beleuchtung liegt beispielsweise vor, wenn das Licht von einer einzigen Lichtquelle kommt, die vom Substrat 10 relativ weit beabstandet ist.

Die beiden Mattstrukturen des Substrates 10 unterscheiden sich in ihrer mittleren Tiefe und/oder in ihrer Korrelationslänge, so daß die eine Mattstruktur das gerichtet einfallende Weißlicht über einen größeren Winkelbereich streut als die andere Mattstruktur. Der Streukegel der Mattstruktur mit dem größeren Winkelbereich ist mit der Bezugsziffer 14 und der Streukegel der anderen Mattstruktur ist mit der Bezugsziffer 16 bezeichnet.

Unter der Annahme, daß die Eigenschaften des Dünnfilms und die Eigenschaften der Mattstrukturen voneinander näherungsweise unabhängig sind, ergibt sich der Vorteil, daß der charakteristische Farbumschlag bei einer gerichteten Beleuchtung für den Benutzer leichter zu erkennen ist, da sich der Farbumschlag nicht nur im Spiegelreflex erschließt.

Mit der Bezugsziffer 18 ist die Beobachtungsrichtung, d.h. die Blickrichtung des Benutzers auf das Substrat 10, bezeichnet. Der Betrachter muß das Substrat 10 kippen und so positionieren, daß die Lichtquelle im Spiegelreflex erscheint. Durch die Überlagerung der Dünnfilmstruktur mit den beiden Mattstrukturen werden die Betrachtungsbereiche, in denen der Dünnfilmeffekt erkennbar ist, in vorteilhafter Weise vergrößert. Gemäß Figur 1 ist beispielsweise die Teilfläche des Substrates 10, die mit der Mattstruktur mit dem Streukegel 16 belegt ist, in hellroter Farbe, d.h. in der Dünnfilmfarbe Rot mit entsprechend großer Intensität, sichtbar. Diejenige Teilfläche, die mit der den Streukegel 14 aufweisenden Mattstruktur belegt ist, erscheint zwar ebenfalls in roter Farbe, sie ist jedoch aufgrund des größeren Streubereichs dunkler, weil die Intensität in der durch den Pfeil 18 bezeichneten Beobachtungsrichtung entsprechend reduziert ist. Das ist durch die Punkte 20 und 22 verdeutlicht.

Beim Kippen des Substrates 10 - wie es in Figur 2 gezeichnet ist - erfolgt ein Wechsel der vom Dünnfilm reflektierten gerichteten Weißlicht-Beleuchtung 12 beispielsweise nach Grün, was durch den Pfeil 23 angedeutet ist. Die durch den Pfeil 12 angedeutete gerichtete Weißlicht-Beleuchtung und die durch den Pfeil 18 verdeutlichte Beobachtungsrichtung bleiben unverändert.

Aufgrund der unterschiedlichen Streucharakteristiken entsprechend dem Streukegel 14 und dem Streukegel 16 der beiden Mattstrukturen erscheint zudem die vorher hellere Teilfläche gemäß dem Punkt 20 in Figur 1 nun dunkler und die vorher gemäß dem Punkt 22 dunklere Teilfläche nun - dem Punkt 22' in Figur 2 entsprechend - heller. Die konkrete Farbgestaltung ist hierbei durch den Dünnfilm vorgegeben. Der Farbwechsel von Rot nach Grün ist selbstverständlich nur beispielhaft angegeben. Neben dem Farbwechsel erfolgt in vorteilhafter Weise auch ein Kontrastwechsel in der relativen Helligkeit. Diese beiden Effekte des Farb- und Kontrastwechsels können vorteilhaft zur Referenzierung herangezogen werden und erlauben somit für den Betrachter eine einfache Kommunikation.

Die Figur 3 verdeutlicht schematisch eine Kombination einer Dünnfilmstruktur 24 mit einer asymmetrischen achromatischen Struktur. Dabei ist mit der Bezugsziffer 26 ein Flächenmuster, bestehend aus zwei verschiedenen Flächenelementen 28 und 30, die aneinander angrenzen, schematisch dargestellt. Der Bereich 32 verdeutlicht eine Anordnung mit einer sägezahnartig gekippten Dünnfilmstruktur und der Bereich 34 verdeutlicht schematisch eine ebene Dünnfilmstruktur. Die unterschiedlichen optischen Wirkungen der beiden Dünnfilmstrukturen 32 und 34 kommen im Wesentlichen dadurch zustande, daß für die gekippte Dünnfilmstruktur 32 zwischen der für den optischen Effekt ausschlaggebenden Dünnfilmdicke Deff und der physikalisch aufgedampften Schichtdicke Dphys ein Unterschied besteht. Im Gegensatz hierzu besteht bei der ebenen Dünnfilmstruktur 34 zwischen der für den optischen Effekt ausschlaggebenden Dünnfilmdicke Deff und der physikalisch aufgedampften Schichtdicke Dphys kein Unterschied. Mit einer solchen Dünnfilmstruktur 24 lassen sich in vorteilhafter Weise zwei verschiedene Effekte erzeugen - je nachdem, ob für den Dünnfilm ein Material mit einem hohen Brechungsindex oder mit einem niedrigen Brechungsindex gewählt wird. Optische Eigenschaften von Dünnschichten sind z.B. in dem Buch "Optical properties of thin solid films" von O. S. Heavens, London, Butterworths Scientific Publications, 1955, Seiten 154 ff. beschrieben.

Bei einem Dünnfilmmaterial mit hohem Brechungsindex ist realisierbar, daß die Teilflächen verschiedene Farben haben und diese Farben über einen relativ großen Kippwinkelbereich stabil sind. Bei einem Dünnfilmmaterial mit niedrigem Brechungsindex ist ein asymmetrischer Farb-Flip realisierbar, d.h. eine Teilfläche 28 bzw. 30 zeigt bei einer Kippung beispielsweise einen Farbumschlag von Rot nach Grün, während die andere Teilfläche 30 bzw. 28 einen Farbumschlag von Grün nach Rot zeigt. Das Rot der einen und das Rot der anderen Teilfläche sind nach einer solchen Kippung jedoch nicht identisch, sondern leicht unterschiedlich. Entsprechendes gilt für die grüne Farbe bzw. für andere Farben entsprechend.

Damit wird ein achromatisch diffraktiver Effekt von einem Dünnfilm-Interferenzeffekt mit einem vorbestimmten Farb-Flip überlagert, wodurch ein definierter Farbwechsel sicher gestellt wird. Die bei einem bekannten kontinuierlichen Farbwechsel vorhandenen bzw. nur erschwert auszuschließenden Definitionsprobleme werden durch den erfindungsgemäß bewirken definierten Farbwechsel beseitigt.

## Patentansprüche

1. Optisch variables Element,
**dadurch gekennzeichnet,**
**daß** Teilflächen des optisch variablen Elements (26) mit achromatischen Oberflächenstrukturen (32, 34), die unterschiedliche Streu-, Reflexions-, oder Beugungscharakteristiken aufweisen, übereinanderliegend mit einer Dünnfilmstruktur (24) kombiniert sind.

2. Optisch variables Element nach Anspruch 1,
**dadurch gekennzeichnet,**
**daß** die achromatischen Oberflächenstrukturen als Mattstrukturen ausgebildet sind, die unterschiedliche Streucharakteristiken aufweisen.

3. Optisch variables Element nach Anspruch 2,
**dadurch gekennzeichnet,**
**daß** die Streucharakteristiken bezüglich Farb- und Kontrastwechsel in der relativen Helligkeit unterschiedlich sind.

4. Optisch variables Element nach Anspruch 2,
**dadurch gekennzeichnet ,**
**daß** die Mattstrukturen sich in ihrer mittleren Tiefe und/oder in ihrer Korrelationslänge unterscheiden.

5. Optisch variables Element nach Anspruch 2,
**dadurch gekennzeichnet,**
**daß** die Mattstrukturen als isotrope Mattstrukturen ausgebildet sind.

6. Optisch variables Element nach Anspruch 2,
**dadurch gekennzeichnet,**
**daß** die Mattstrukturen als anisotrope Mattstrukturen ausgebildet sind.

7. Optisch variables Element nach Anspruch 1,
**dadurch gekennzeichnet ,**
**daß** die achromatischen Oberflächenstrukturen als achromatische Blaze-Strukturen und/ oder als Makrostrukturen ausgebildet sind, die unterschiedliche Reflexionscharakteristika aufweisen.

8. Optisch variables Element nach Anspruch 7,
**dadurch gekennzeichnet ,**
**daß** die Oberflächenstruktur einer Teilfläche als Sägezahnstruktur ausgebildet ist.

9. Optisch variables Element nach Anspruch 1,
**dadurch gekennzeichnet ,**
**daß** die Dünnfilmstruktur eine Dünnfilmschicht mit einem hohen Brechungsindex, insbesonders mit einem Brechungsindex über 2, aufweist.

10. Optisch variables Element nach Anspruch 1,
**dadurch gekennzeichnet ,**
**daß** die Dünnfilmstruktur eine Dünnfilmschicht mit einem niedrigen Brechungsindex, insbesonders mit einem Brechungsindex unter 1.5 , aufweist.

11. Sicherheitselement mit einem optisch variablen Element nach einem der vorhergehenden Ansprüche.

## Claims

1. Optically variable element, **characterized in that** partial areas of the optically variable element (26) with achromatic surface structures (32, 34) having different scattering, reflection or diffraction characteristics are combined with a thin-film structure (24) such that they lie one on top of the other.

2. Optically variable element according to Claim 1, **characterized in that** the achromatic surface structures are in the form of matt structures having differing scattering characteristics.

3. Optically variable element according to Claim 2, **characterized in that** the scattering characteristics differ with respect to colour and contrast change in the relative brightness.

4. Optically variable element according to Claim 2, **characterized in that** the matt structures differ in their average depths and/or in their correlation length.

5. Optically variable element according to Claim 2, **characterized in that** the matt structures are in the form of isotropic matt structures.

6. Optically variable element according to Claim 2, **characterized in that** the matt structures are in the form of anisotropic matt structures.

7. Optically variable element according to Claim 1, **characterized in that** the achromatic surface structures are in the form of achromatic blaze structures and/or macrostructures having differing reflection characteristics.

8. Optically variable element according to Claim 7, **characterized in that** the surface structure of a partial area is in the form of a sawtooth structure.

9. Optically variable element according to Claim 1, **characterized in that** the thin-film structure has a thin-film layer with a high refractive index, in particular with a refractive index of more than 2.

10. Optically variable element according to Claim 1, **characterized in that** the thin-film structure has a thin-film layer with a low refractive index, in particular with a refractive index of less than 1.5.

11. Security element with an optically variable element according to one of the preceding claims.

## Revendications

1. Élément optiquement variable,
**caractérisé en ce**
**que** des surfaces partielles de l'élément optiquement variable (26) avec des structures de surfaces achromatiques (32, 34), qui présentent différentes caractéristiques de diffusion, de réflexion ou de diffraction, sont combinés avec une structure de couche mince par superposition.

2. Élément optiquement variable selon la revendication 1,
**caractérisé en ce**
**que** les structures de surfaces achromatiques sont configurées comme des structures mates, qui présentent différentes caractéristiques de diffusion.

3. Élément optiquement variable selon la revendication 2,
**caractérisé en ce**
**que** les caractéristiques de diffusion concernant le changement de couleur et de contraste sont différentes au niveau de la luminosité relative.

4. Élément optiquement variable selon la revendication 2,
**caractérisé en ce**
**que** les structures mates se différencient au niveau de leur profondeur moyenne et/ou de leur longueur de corrélation.

5. Élément optiquement variable selon la revendication 2,
**caractérisé en ce**
**que** les structures mates sont configurées comme des structures mates isotropes.

6. Élément optiquement variable selon la revendication 2,
**caractérisé en ce**
**que** les structures mates sont configurées comme des structures mates anisotropes.

7. Élément optiquement variable selon la revendication 1,
**caractérisé en ce**
**que** les structures de surface achromatiques sont configurées comme des structures achromatiques de blaze et/ou des structures mates qui présentent différentes caractéristiques de réflexion.

8. Élément optiquement variable selon la revendication 7,
**caractérisé en ce**
**que** la structure de surface d'une surface partielle est configurée comme une structure en dent de scie.

9. Élément optiquement variable selon la revendication 1,
**caractérisé en ce**
**que** la structure en couche mince présente une couche mince avec un indice de réfraction élevé, en particulier avec un indice de réfraction supérieur à 2.

10. Élément optiquement variable selon la revendication 1,
**caractérisé en ce**
**que** la structure en couche mince présente une couche mince avec un indice de réfraction bas, en particulier avec un indice de réfraction inférieur à 1, 5.

11. Élément de sécurité avec un élément optiquement variable selon l'une quelconque des revendications précédentes.
